# EUROPEAN PATENT SPECIFICATION

(11) **EP 2 541 386 B1**
(45) Date of publication and mention of the grant of the patent: **07.08.2019**
(21) Application number: 12170879.6
(22) Date of filing: 05.06.2012
(51) Int. Cl.: G06F 3/048, G06F 3/042, G06F 3/0488, G06F 3/043, G06F 3/0482

(54) **Display device with touch control feature**
Anzeigevorrichtung mit Berührungssteuerungsfunktion
Dispositif d'affichage avec fonction de contrôle tactile

(30) Priority: 28.06.2011 TR 201106373
(43) Date of publication of application: 02.01.2013
(60) Divisional application: 19174103.2
(73) Proprietor: Vestel Elektronik Sanayi ve Ticaret A.S., 45030 Manisa (TR)
(72) Inventor: Cesmeci, Mete, 35410 Izmir (TR); Tuzun, Levent, 35410 Izmir (TR)
(74) Representative: Grünecker Patent- und Rechtsanwälte PartG mbB

(56) References cited:
- EP-A1- 2 315 420
- WO-A2-02/07072
- DE-A1- 4 121 180
- US-A1- 2003 013 496
- US-A1- 2008 297 487
- US-A1- 2010 134 447
- US-A1- 2011 115 748

## Description

### Technical Field

The present invention is related to display devices with touch control feature.

### Prior Art

Display devices with touch control feature have become very popular among consumer electronic devices since the cost of touch control implementation has decreased thanks to common usage in recent years. The touch control technologies are widely used both in mobile devices (i.e. portable computers, GSM phones) and home appliances such as televisions, multimedia players etc.

The implementation of touch control feature known from the prior art requires usage of some additional conductive and/or dielectric layers on the touch surface. For instance, for a display to be equipped with resistive touch screen, at least two conductive layers are placed as a touch surface onto the display. When the one of the layers is pressed onto the other one, the touch is detected.

However, implementation of additional layers onto display devices particularly requires additional process during the manufacture of the display itself. Hence the implementation of conventional touch screen becomes difficult and costly especially for large displays.

Furthermore, the touch screen layers implemented onto the large displays are easily deformed due to their large sizes, and touch screen loses its the functionality. This is due to the fact that distance between the layers of the touch screen is far too shorter than the total area of the touch screen.

The patent document US2004/0178006A1 discloses a resistive touch screen, comprising a resistive layer and a conductive layer. When the layers are pressed onto each other at a certain point, the position of the point can be detected by measuring the resistivity between the layers. However, such applications are prone to have short life since the layers are deformed within time and may randomly touch each other.

The patent document EP2315420A1 discloses a motion detecting input device for a mobile terminal. Said device comprises plurality of transmitters and receivers behind a screen. When an obstacle (for example user finger) is near to said screen, signals coming from said transmitters are reflected by said obstacle. Then, by detecting reflected signals via said receivers, location of the obstacle is detected. According to this document, several transmitters are placed around a receiver. By sequentially activating said transmitter in a direction (clockwise or counter clockwise), location of the obstacle is detected more accurately.

Another patent document DE4121180A1 discloses an interactive display system. Said display system comprises several transmitters and receivers located at the edge of the display. When an obstacle is placed on said display, signals, which are sent from transmitter and received from receivers, are blocked. According to blocked signals, location of the obstacle on the display is detected.

Patent documents US2008297487A1 and US2003013496A1 disclose display devices with proximity sensors. According to these documents, if a user becomes proximate to the display devices, sound or light intensity settings of the display devices are adjusted. Therefore, users are prevented from being annoyed due to high noise or high backlight intensity.

Patent document WO0207072A2 discloses a touch panel system. Said system comprises plurality of emitters and detectors that are positioned n proximity to a display screen. According to this document, energy beams emitted from the emitters are detected by said detector. When an obstacle touches the display screen, according to the location of said obstacle, beams emitted from some of the emitters cannot reach some of the detectors. Instead, beams are reflected from said obstacle and they reach to other detectors. Therefore, according to the beam detection of the detectors (decrease or increase of the beam level), location of the obstacle is determined.

Another patent document US2011115748A1 discloses an infrared touch screen, comprising plurality of infrared transmitters and receivers located at the frame of the screen. In this document, infrared lights reflected from an object are detected by the receivers in order to determine the location of the object on the screen.

Another patent document US2010134447A1 discloses an input device for a mobile terminal. According to this document, pair of light emitting elements and light receiving elements are placed on the frame of a display. Therefore, by detecting the lights reflected from an object, location of said object is able to be determined.

Therefore an improved technology should be used for long life operation on display devices.

### Brief Description of the Invention

The present invention discloses a display device with touch control feature which comprises at least one screen; a frame into which the screen is fitted; at least two transmitters which generate infrared light beams or ultrasonic signal beam, located on one edge of the frame; at least one receiver which detect the beams coming from at least one transmitter and reflected from an obstacle, located next to the said transmitters on the same edge of the frame; at least one scanning means which sequentially activates the transmitters, detects a sense signal level of receivers, activates an on screen menu which is used for adjustment of display parameters, when the obstacle becomes proximate to the screen and which detects the position of the obstacle according to the detected sense signal level of the receiver, when the obstacle is in contact with the screen.

In accordance with the present invention, the receivers and transmitters are placed on the same edge to provide a robust and long-life functional touch control within the display devices. The user enters the commands to the display device parameters by touching the screen. In response to the selections displayed on the menu, the display adjustment is fulfilled.

### Object of the Invention

The object of the invention is to provide a display device with touch control function.

Another object of the invention is to provide a touch control system comprising infrared transmitters and receivers for display devices.

Another object of the invention is to provide a touch control system comprising ultrasonic transmitters and receivers for display devices.

Another object of the invention is to provide a display device with touch control feature comprising both transmitters and receivers on the same edge of the display.

Another object of the invention is to provide a display device which satisfies the aesthetic needs of the users by reducing the thickness of the frame.

Another object of the invention is to provide an adjustment method for providing user - comfort while a touch control of a display device is being used.

### Description of the Drawings

**Figure 1****;** is a front view of a display device of the present invention.
**Figure 2****;** is a detailed front view of a display device of the present invention while an obstacle is placed onto the display.
**Figure 3****;** is a detailed front view of a display device of the present invention with the touch areas.
**Figure 4****;** is a block diagram of the touch control circuitry of the present invention.

The reference numbers as used in figures may possess the following meanings;

| | |
|---|---|
| Display device | (D) |
| Touch area | (T) |
| Frame | (F) |
| First edge | (F1) |
| Second edge | (F2) |
| Screen | (S) |
| Transmitter | (1) |
| Receiver | (2) |
| Scanning means | (3) |
| Adjusting means | (4) |

### Description of the Invention

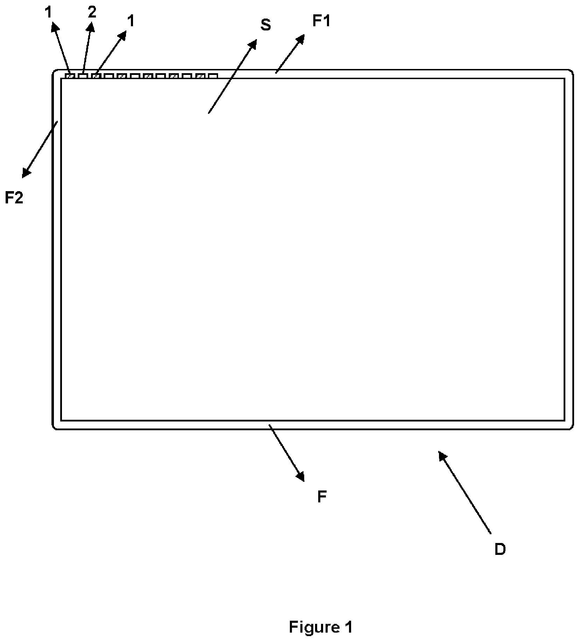

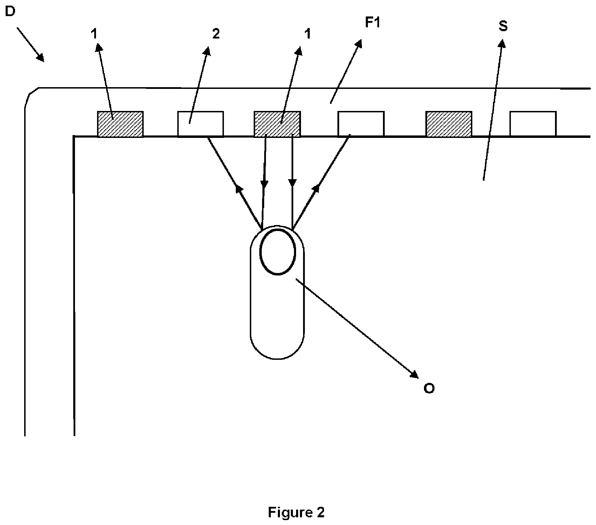

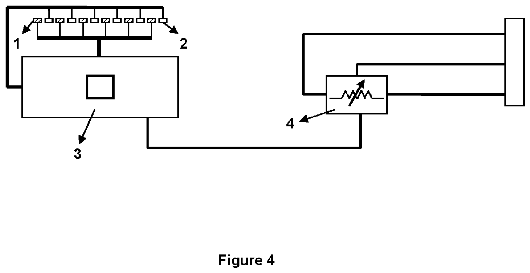

An exemplary illustration of the display device (D) of the present invention is given in figure 1. The display device (D) comprises a frame (F) into which the screen (S) of the device (D) is fitted. Said frame (F) can be the frame of a television or frame of a projection screen. At least two transmitters (1) (infrared or ultrasonic transmitters), which generate infrared light beam or ultrasonic signal beam, are placed along at least a first edge (F1) (either horizontal edge or vertical edge) of the frame. At least one receiver (2) is placed next to said transmitters (1) on the same edge (F1) wherein preferably one receiver (2) is placed between two transmitters (1). Said transmitters (1) are separated into two groups, wherein first, third, fifth (i.e. odd numbered) transmitters (1) are in the first group and second, fourth, sixth (i.e. even numbered) transmitters are in the second group. Said transmitters (1) or group of transmitters (1) are activated sequentially, in other words only first group or second group of transmitters (1) are activated at a time. Said receivers (2) detect the beams originating from the transmitters (1) if the beam is reflected from an obstacle (O), as shown in figure 2. Said display device (D) further comprises at least one scanning means (3), as shown in figure 4. Said scanning means (3) sequentially activates the transmitters (1), detects a sense signal level of receivers (2), activates an on screen menu which is used for adjustment of display parameters when the obstacle (O) becomes proximate to the screen (S) and which detects the position of the obstacle (O) according to the detected sense signal level of the receiver (2) when the obstacle (O) is in contact with the screen (S)

The infrared light beam or ultrasonic signal beam, which is generated by one transmitter (1), radiates towards different directions in a conical path. Thus, the presence of the obstacle (O) can be detected by the receiver (2) when the obstacle (O) is proximate to or in contact with the screen (S). When the obstacle (O) falls into the beam angle of one of the transmitter (1), beams coming from the transmitter (1) is reflected from obstacle (O) and sent to at least one of the receivers (2). According to the distance between the obstacle (O) and the screen (S), intensity of the beams reflected to the receiver (2) varies. Thus, distance between the obstacle (O) and the screen (S) can be measured according to a sense signal level detected on the receiver (2). If said distance is less than a predetermined threshold value, it is interpreted that the obstacle (O) is proximate to the screen (S). Said threshold value can be set during the manufacturing of the display device (D) or can be adjusted by the user.

When an obstacle (O) (i.e. user's finger, a pen or any other passive controller) becomes proximate to the screen (S), the beam generated by the transmitter (1) is reflected from the obstacle (O) and sent to the receiver (2). Thus, presence of the obstacle (O) is detected. When said obstacle (O) is placed onto the screen (S) (i.e. user touches the screen (S) with the obstacle (O)), the beam of active transmitter (1) is reflected to the receiver (2). In accordance with activated transmitter (1), intensity of beams reflected to the receivers (2) change. In order to obtain precise position information, sense signal levels of the receiver (2) in response to beams coming from at least two transmitters (1) are evaluated. Alternatively, sense signal levels of the receivers (2) in response to beams coming from one transmitter (1) and reflected to at least two receivers (2) are evaluated. According to position of the obstacle (O), sense signal level reflected to the receivers (2) changes. Thus, position of the obstacle (O) is detected according to the sense signal level measured from at least one receiver (2). When the obstacle (O) is removed away from the screen (S), since no beam will be reflected to the receiver (2), the absence of beam can be interpreted as non-use of touch control of the display device (D). Multiple transmitters (1) and receivers (2) can be placed along a single edge (F1) of the frame (F) to cover a desired portion of the screen (S). By using such touch detection system, display device (D) no more needs control buttons on the frame to control the device (D). According to the present invention, thickness of the frame (F) of the display device (D) is reduced since the transmitter (1) and receiver (2) set, which is placed along only one edge (F1) of the frame, does not require much space and no control buttons are needed on the frame (F). Thus, with a thinner frame (F), display device (D) of the present invention satisfies aesthetical needs of the users.

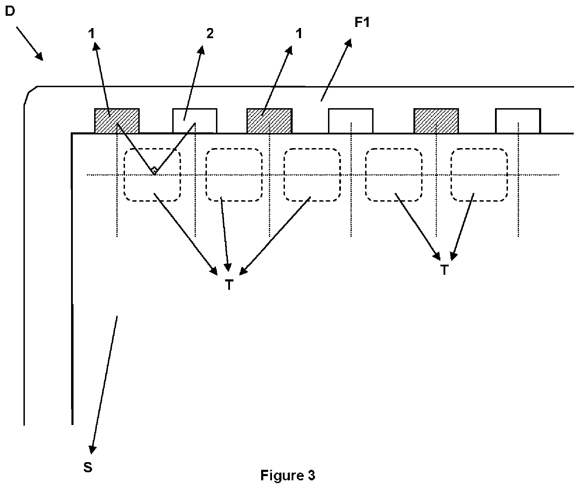

In a preferred embodiment of the present invention, as shown in figure 3, several touch areas (T) are arranged. In order to improve the sensing quality of the touch areas (T) (i.e. sensing the touch areas (T) more accurately), the angle between two hypothetical lines, which come from the center of one of said touch area (T) and go to the center of two neighbouring transmitter (1) and receiver (2), is preferably set to 90°. With this configuration, crosstalk of the touch areas (T) is reduced to minimum when activated transmitter is changed. By this configuration, six different touch areas (T) can be generated using four transmitters (1) and three receivers (2). These touch areas (T) can be used to activate different control parameters, such as increasing/decreasing the contrast, brightness or sound parameters of the device (D) or changing the channel.

In a preferred embodiment of the present invention, another set of transmitters (1) and receivers (2) (i.e. at least two transmitters (1) and at least one receiver (2)) are also placed along a second edge (F2) of the frame. Said second edge (F2) may be a neighbouring edge of the first edge (F1). By placing said transmitter (1) and receiver (2) set to a second edge (F2), position of an obstacle (O) can be detected by both transmitter (1) and receiver (2) sets placed along the two edges (F1, F2) of the frame (F). Thus, position of the obstacle (O) is detected more accurately and touch control of the display device (D) becomes more sensitive.

Figure 4 illustrates a block diagram of the touch control circuit of the display device (D) of the present invention. The circuit comprises at least one scanning means (3), which activates transmitters (1) sequentially, keeps receivers (2) at on state, detects a sense signal of the receiver (2), activates an on screen menu when the presence of an obstacle (O) which is become proximate to the screen (S), is detected by at least one receiver (2) and detects the position of the obstacle (O) when the obstacle (O) is placed on the screen (S). Said scanning means (3) is at least one controller, preferably at least one microprocessor. Scanning means (3) can be the main processor of the display device or at least one additional processor in the display device (D) other than said main processor. Consequently, the area covered by the transmitter (1) beams is scanned. Scanning means may further comprise means for evaluating sense signals of the receivers (2). Since the obstacle (O) may be placed in a detection region of multiple receivers (2), the exact position of the obstacle (O) can be calculated evaluating the information of at least two positions received from the receivers (2). Hence a plurality of positions can be detected by a reduced number of receivers (2).

The circuit may further comprise at least one adjusting means (4), which decreases the intensity of a backlight (not shown in figures) of the screen (S) when an obstacle (O) is detected near the screen (S) or on the screen (S) by the scanning means (3). Since the user is very close to the device (D) during usage of the touch control feature of the display device (D), nominal backlight intensity values may be too high and disturb user. Therefore, by decreasing the light intensity, user - comfort is provided while the touch control feature of the display device (D) is being used. Furthermore, if the display device (D) comprises an audio output means (i.e. a speaker), the display device (D) may comprise another adjusting means (3) which decreases the volume level of the audio output means. Hence aural comfort of the user is provided while the touch control of the display device (D) is being used. The display device (D) may further comprise means for resetting the audio and intensity of backlight level when the audio and intensity of backlight level that are previously decreased are being adjusted manually. Hence the user may correctly adjust, for instance, brightness of the screen (S) using the touch control of the display device (D).

The present invention also comprises an adjustment method for display device (D) with a touch control feature, which comprises the steps of detecting the presence of an obstacle (O) which becomes proximate to the screen (S) of the device (D), activating an on screen menu when the obstacle (O) becomes proximate to the screen (S), detecting the position of the obstacle (O) if the obstacle (O) is put on the screen and performing the necessary action in accordance with detected position of the obstacle (O).

The method may further comprise the steps of;
- detecting the presence of an obstacle (O) which becomes proximate to the screen (S) of the device (D),
- if the obstacle (O) is present, saving a current value of at least one adjustment and decreasing at least one adjustment parameter of the display device (D), in order to provide user - comfort when the touch control is being used,
- if the user is adjusting a display parameter which is decreased by the device (D) to provide user - comfort, increasing the parameter to the saved setting.

The method is meant to provide user- comfort while the touch control is being used. Hence, the backlight intensity and/or volume level of the device is decreased when the user is making some adjustments using the touch control. However, if the user intends to make a backlight and/or volume adjustment, the original values of the adjustments are restored to enable the user to make adjustments accordingly.

Within the display device (D) of the present invention, durable and long-life functional touch control is obtained without changing the screen (S) of the display device (D). Furthermore, the user - comfort is achieved while the user is using the touch control of the device (D) and aesthetical needs of the users are achieved by reducing the thickness of the frame (F) of the display device (D).

## Claims

1. A display device (D) which comprises at least one screen (S), a frame (F) into which the screen (S) is fitted comprising;
- at least two transmitters (1) which generate infrared light beams or ultrasonic signal beams, located on one edge (F1) of the frame (F);
- at least one receiver (2), which detect the beams coming from at least one transmitter (1) and reflected from an obstacle (O) and which is placed between the at least two transmitters (1) on the same edge (F1) of the frame (F);
wherein, among the at least two transmitters, a first transmitter and further odd-numbered transmitters along the edge are in a first group of transmitters, a second transmitter and further even-numbered transmitters along the edge are in a second group of transmitters, and two transmitters located next to the same receiver are not in the same group of transmitters, said display device further comprises at least one scanning means which activates all transmitters (1) in the first group at a time and subsequently all transmitters in the second group at a time such that transmitters (1) located next to same receiver (2) are not activated simultaneously, detects a sense signal level of receivers (2), activates an on screen menu which is used for adjustment of display parameters, when the obstacle (O) becomes proximate to the screen (S) and which detects the position of the obstacle (O) when the obstacle (O) is in contact with the screen (S) according to the detected sense signal level of the receiver (2).

2. A display device (D) according to claim 1 **characterized in that** said scanning means (3) comprises at least one microprocessor.

3. A display device according to claim 1 **characterized in that** said scanning means (3) comprises main processor of the display device (D).

4. A display device (D) according to claim 1 **characterized in that** it further comprises at least two transmitter (1) and at least one receiver (2) which are placed along a second edge (F2) of the frame.

5. A display device (D) according to claim 1 **characterized in that** it further comprises at least one adjusting means (4) which decreases the intensity of a backlight of the screen (S) when an obstacle (O) is detected by the scanning means (3).

6. A display device (D) according to claim 1 **characterized in that** it further comprises at least one adjusting means (4) which decreases a volume level of an audio output means comprised by the display device (D), when an obstacle (O) is detected by the scanning means (3).

7. An adjustment method for a display device (D), which comprises at least two transmitters (1) and at least one receiver (2) in at least one edge (F1) of one frame, wherein the one receiver (1) is placed between the at least two transmitters (1) wherein, among the at least two transmitters, a first transmitter and further odd-numbered transmitters along the edge are in a first group of transmitters, a second transmitter and further even-numbered transmitters along the edge are in a second group of transmitters, and two transmitters located next to the same receiver are not in the same group of transmitters, and that it comprises the steps of;
activating all transmitters (1) in the first group at a time and subsequently all transmitters in the second group at a time, such that transmitters (1) located next to same receiver (2) are not activated simultaneously; measuring a sense signal level of the receivers (2);
detecting presence of an obstacle (O) which becomes proximate to a screen (S) of the device (D) and reflects the beams coming from activated transmitter (1) to at least one receiver (2);
activating an on screen menu when the obstacle (O) becomes proximate to the screen (S);
detecting the position of the obstacle (O) according to the measured sense signal level of the receivers (2); if the obstacle (O) is in contact with the screen
adjusting the display parameters of a device in accordance with detected position of the obstacle (O).

8. An adjustment method according to claim 7, **characterized in that** it further comprises the steps of;
if the obstacle is present (O), saving a current value of at least one adjustment;
decreasing said adjustment parameter of the display device (D);
if a user is adjusting a display parameter which is decreased by the device (D), increasing the adjustment to the saved setting.

## Patentansprüche

1. Anzeigevorrichtung (D), die mindestens einen Bildschirm (S), einen Rahmen (F), in den der Bildschirm (S) eingepasst ist, umfasst, umfassend:
mindestens zwei Sender (1), die Infrarot-Lichtstrahlen oder Ultraschall-Signalstrahlen erzeugen, angeordnet auf einer Kante (F1) des Rahmens (F);
mindestens einen Empfänger (2), der die Strahlen ermittelt, die von mindestens einem Sender (1) kommen und von einem Hindernis (O) reflektiert werden, und der zwischen den mindestens zwei Sendern (1) auf der gleichen Kante (F1) des Rahmens (F) angeordnet ist;
wobei,
unter den mindestens zwei Sendern, ein erster Sender und weitere ungeradzahlige Sender entlang der Kante zu einer ersten Gruppe von Sendern gehören, ein zweiter Sender und weitere geradzahlige Sender entlang der Kante zu einer zweiten Gruppe von Sendern gehören, und zwei Sender, die neben dem gleichen Empfänger angeordnet sind, nicht zu der gleichen Gruppe von Sendern gehören,
wobei die Anzeigevorrichtung des Weiteren mindestens eine Scaneinrichtung umfasst, die alle Sender (1) in der ersten Gruppe auf einmal aktiviert und anschließend alle Sender in der zweiten Gruppe auf einmal aktiviert,
dergestalt, dass Sender (1), die neben dem gleichen Empfänger (2) angeordnet sind, nicht gleichzeitig aktiviert werden,
einen Erfassungssignalpegel (sense signal level) von Empfängern (2) ermittelt, ein Bildschirmmenü aktiviert, das zur Einstellung von Anzeigeparametern verwendet wird, wenn sich das Hindernis (O) in der Nähe des Bildschirmes (S) befindet, und die Position des Hindernisses (O) entsprechend dem ermittelten Erfassungssignalpegel des Empfängers (2) ermittelt, wenn das Hindernis (O) in Kontakt mit dem Bildschirm (S) kommt.

2. Anzeigevorrichtung (D) nach Anspruch (1),
**dadurch gekennzeichnet, dass**
die Scaneinrichtung (3) mindestens einen Mikroprozessor umfasst.

3. Anzeigevorrichtung nach Anspruch (1),
**dadurch gekennzeichnet, dass**
die Scaneinrichtung (3) den Hauptprozessor der Anzeigevorrichtung (D) umfasst.

4. Anzeigevorrichtung (D) nach Anspruch (1),
**dadurch gekennzeichnet, dass**
sie des Weiteren mindestens zwei Sender (1) und mindestens einen Empfänger (2) umfasst, die entlang einer zweiten Kante (F2) des Rahmens angeordnet sind.

5. Anzeigevorrichtung (D) nach Anspruch (1),
**dadurch gekennzeichnet, dass**
sie des Weiteren mindestens eine Einstelleinrichtung (4) umfasst, die die Intensität eines Hintergrundlichts des Bildschirms (S) verringert, wenn ein Hindernis (O) von der Scaneinrichtung (3) ermittelt wird.

6. Anzeigevorrichtung (D) nach Anspruch (1),
**dadurch gekennzeichnet, dass**
sie des Weiteren mindestens eine Einstelleinrichtung (4) umfasst, die den Lautstärkepegel einer Audioausgabeeinrichtung verringert, die in der Anzeigevorrichtung (D) enthalten ist, wenn ein Hindernis (O) von der Scaneinrichtung (3) ermittelt wird.

7. Verfahren zum Einstellen einer Anzeigevorrichtung (D), die mindestens zwei Sender (1) und mindestens einen Empfänger (2) in mindestens einer Kante (F1) von einem Rahmen umfasst, wobei der eine Empfänger (1) zwischen den mindestens zwei Sendern (1) angeordnet ist;
wobei,
unter den mindestens zwei Sendern, ein erster Sender und weitere ungeradzahlige Sender entlang der Kante zu einer ersten Gruppe von Sendern gehören, ein zweiter Sender und weitere geradzahlige Sender entlang der Kante zu einer zweiten Gruppe von Sendern gehören, und zwei Sender, die neben dem gleichen Empfänger angeordnet sind, zu der gleichen Gruppe von Sendern gehören,
und das die nachstehenden Schritte umfasst:
Aktivieren aller Sender (1) in der ersten Gruppe auf einmal und anschließend aller Sender in der zweiten Gruppe auf einmal,
dergestalt, dass Sender (1), die neben dem gleichen Empfänger (2) angeordnet sind, nicht gleichzeitig aktiviert werden;
Messen eines Erfassungssignalpegels des Empfängers (2);
Ermitteln der Anwesenheit eines Hindernisses (O), das sich in der Nähe des Bildschirmes (S) der Vorrichtung (D) befindet, und die Strahlen, die von dem aktivierten Sender (1) kommen, zu mindestens einem Empfänger (2) reflektiert;
Aktivieren eines Bildschirmmenüs, wenn das Hindernis (O) sich in der Nähe des Bildschirmes (S) befindet;
Ermitteln der Position des Hindernisses (O) entsprechend dem gemessenen Erfassungssignalpegel der Empfänger (2), wenn das Hindernis (O) in Kontakt mit dem Bildschirm (S) kommt;
Einstellen der Anzeigeparameter einer Vorrichtung in Übereinstimmung mit der ermittelten Position des Hindernisses (O).

8. Verfahren zum Einstellen nach Anspruch 7,
**dadurch gekennzeichnet, dass**
es des Weiteren die nachstehende Schritte umfasst:
wenn das Hindernis (O) vorhanden ist, Speichern eines Stromwertes von mindestens einer Einstellung;
Verringern der Einstellparameter der Anzeigevorrichtung (D);
wenn ein Benutzer einen Anzeigeparameter einstellt, der durch die Vorrichtung (D) verringert wird, Vergrößern der Einstellung zu der gespeicherten Einstellung.

## Revendications

1. Dispositif d'affichage (D) qui comprend au moins un écran (S), une structure (F) dans laquelle l'écran (S) est installé comprenant :
- au moins deux émetteurs (1) qui génèrent des faisceaux de lumière infrarouge ou des faisceaux de signaux à ultrasons, installés sur une arête (F1) de la structure (F) ;
- au moins un récepteur (2), qui détecte les faisceaux provenant au moins d'un émetteur (i) et reflétés depuis un obstacle (O) et qui est positionné entre les au moins deux émetteurs (1) sur la même arête (F1) de la structure (F) ;
dans lequel,
parmi l'au moins deux émetteurs, un premier émetteur et d'autres émetteurs numérotés impairs le long de l'arête sont dans un premier groupe d'émetteurs, un deuxième émetteur et d'autres émetteurs numérotés pairs le long de l'arête sont dans un deuxième groupe d'émetteurs, et deux émetteurs situés à côté du même récepteur ne sont pas dans le même groupe d'émetteurs,
ledit dispositif d'affichage comprend en outre au moins un moyen d'analyse qui active tous les émetteurs (1) dans le premier groupe en même temps
et consécutivement tous les émetteurs dans le deuxième groupe en même temps
de sorte que des émetteurs (1) installés à côté du même récepteur (2) ne sont pas activés simultanément, détecte un niveau de signal de détection de récepteurs (2), active un menu à l'écran qui est utilisé pour un réglage de paramètres d'affichage, lorsque l'obstacle (O) devient proche de l'écran (S) et détecte la position de l'obstacle (O) lorsque l'obstacle (O) est en contact avec l'écran (S) selon le niveau de signal de détection détecté du récepteur (2).

2. Le dispositif d'affichage (D) selon la revendication 1 **caractérisé en ce que** ledit moyen d'analyse (3) comprend au moins un microprocesseur.

3. Le dispositif d'affichage selon la revendication 1 **caractérisé en ce que** ledit moyen d'analyse (3) comprend un processeur principal du dispositif d'affichage (D).

4. Le dispositif d'affichage (D) selon la revendication 1 **caractérisé en ce qu'**il comprend en outre au moins deux émetteurs (1) et au moins un récepteur (2) qui sont placés le long d'une deuxième arête de la structure.

5. Le dispositif d'affichage (D) selon la revendication 1 **caractérisé en ce qu'**il comprend en outre au moins un moyen de réglage (4) qui diminue l'intensité d'un rétroéclairage de l'écran (S) lorsqu'un obstacle (O) est détecté par le moyen d'analyse (3).

6. Le dispositif d'affichage (D) selon la revendication 1 **caractérisé en ce qu'**il comprend en outre au moins un moyen de réglage (4) qui diminue un niveau de volume d'un moyen de sortie audio intégré au dispositif d'affichage (D), lorsqu'un obstacle (O) est détecté par le moyen d'analyse (3).

7. Procédé de réglage d'un dispositif d'affichage (D), qui comprend au moins deux émetteurs (1) et au moins un récepteur (2) dans au moins une arête (F1) d'une même structure, dans lequel l'un récepteur (1) est placé entre l'au moins deux émetteurs (1)
dans lequel,
parmi l'au moins deux émetteurs, un premier émetteur et d'autres émetteurs numérotés impairs le long de l'arête sont dans un premier groupe d'émetteurs, un deuxième émetteur et d'autres émetteurs numérotés pairs le long de l'arête sont dans un deuxième groupe d'émetteurs, et deux émetteurs situés à côté du même récepteur ne sont pas dans le même groupe d'émetteurs,
et qui comprend les étapes de :
activation de tous les émetteurs (1) dans le premier groupe en même temps
et consécutivement de tous les émetteurs dans le deuxième groupe en même temps
de sorte que des émetteurs (1) installés à côté d'un même récepteur (2) ne sont pas activés simultanément ;
mesure d'un niveau de signal de détection des récepteurs (2) ;
détection d'une présence d'un obstacle (O) qui devient proche d'un écran (S) du dispositif (D) et reflète les faisceaux provenant d'un émetteur activé (1) vers au moins un récepteur (2) ;
activation d'un menu à l'écran lorsque l'obstacle (O) devient proche de l'écran (S) ;
détection de la position de l'obstacle (O) en fonction du niveau de signal de détection mesuré des récepteurs (2) ;
si l'obstacle (O) est en contact avec l'écran
réglage des paramètres d'affichage d'un dispositif en fonction d'une position détectée de l'obstacle (0).

8. Le procédé de réglage selon la revendication 7, **caractérisé en ce qu'**il comprend en outre les étapes de :
si l'obstacle est présent (O), enregistrement d'une valeur courante d'au moins un réglage ;
diminution du dit paramètre de réglage du dispositif d'affichage (D) ;
si un utilisateur règle un paramètre d'affichage qui est diminué par le dispositif (D), augmentation du réglage enregistré.
